(19) Europäisches Patentamt
European Patent Office
Office européen des brevets

(11) **EP 4 678 930 A1**

(12) **EUROPEAN PATENT APPLICATION**
published in accordance with Art. 153(4) EPC

(43) Date of publication:
**14.01.2026  Bulletin 2026/03**

(21) Application number: **24818968.0**

(22) Date of filing: **13.02.2024**

(51) International Patent Classification (IPC):
**F16C 33/58** (2006.01)    **F16C 19/06** (2006.01)

(52) Cooperative Patent Classification (CPC):
**F16C 19/06; F16C 33/58**

(86) International application number:
**PCT/JP2024/004897**

(87) International publication number:
**WO 2024/252729 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **05.06.2023  JP 2023092200**

(71) Applicant: **NSK LTD.**
**Tokyo 141-8560 (JP)**

(72) Inventors:
• **TAKANO, Susumu**
 **Fujisawa-shi, Kanagawa 251-8501 (JP)**
• **KOMATA, Hiroki**
 **Fujisawa-shi, Kanagawa 251-8501 (JP)**
• **HASHIMOTO, Sho**
 **Fujisawa-shi, Kanagawa 251-8501 (JP)**

(74) Representative: **Grünecker Patent- und
Rechtsanwälte
PartG mbB
Leopoldstraße 4
80802 München (DE)**

(54) **ROLLING BEARING**

(57)    A bearing body portion of a rolling bearing is provided with a lifespan information display indicating a flaking life originating from an inclusion as an initiation point, or a corresponding information display associated with the flaking life. The inclusion is included in the rolling bearing. The flaking life is a lifespan of the rolling bearing predicted on the basis of a size of the inclusion.

**Fig.1**

EP 4 678 930 A1

## Description

## Technical Field

The present disclosure relates to a rolling bearing.

## Background Art

One of inherent fatigue lives of materials of rolling bearings is subsurface-initiated flaking. Subsurface-initiated flaking occurs when cracks are generated and propagate starting from an inclusion (non-metallic inclusion) in a material of a rolling bearing. For example, Patent Literature 1 describes a method for predicting a flaking life originating from an inclusion as an initiation point by taking into account a size of the inclusion inside a bearing.

## Citation List

## Patent Literature

[Patent Literature 1] Japanese Patent No. 6408222

## Summary of Invention

## Technical Problem

Here, in general, a size of an inclusion present inside a rolling bearing varies from one rolling bearing to another. Thus, even rolling bearings of the same model number may have different flaking life originating from inclusions as initiation points. For bearing users, being able to check flaking life of respective rolling bearings allows them to use the rolling bearings for an operating time closer to their actual lives. This can reduce the frequency of bearing replacement and the like, thereby improving economical efficiency, which is appropriate.

Thus, the present disclosure describes a rolling bearing in which individual flaking life can be checked.

## Solution to Problem

An aspect of the present disclosure is a rolling bearing in which a lifespan information display indicating a flaking life originating from an inclusion as an initiation point, or a corresponding information display associated with the flaking life is attached to a bearing body portion, wherein the inclusion is an inclusion included in the rolling bearing, and the flaking life is a lifespan of the rolling bearing predicted on the basis of a size of the inclusion.

With this rolling bearing, it is possible to check the flaking life of the rolling bearing on the basis of the lifespan information display or the corresponding information display attached to the bearing body portion. In addition, this flaking life is predicted on the basis of the size of the inclusion included in the rolling bearing. That is, this flaking life represents a lifespan of each individual rolling bearing. In this way, with this rolling bearing, the flaking life of each individual rolling bearing can be checked on the basis of the lifespan information display or the corresponding information display attached to the bearing body portion.

In the above rolling bearing, the flaking life may be expressed as a multiplier to a basic rating life. In this case, a bearing user can check a degree of the flaking life relative to the basic rating life. Further, for example, the bearing user can more easily perform various calculations such as calculating a usable period of the rolling bearing.

## Advantageous Effects of Invention

According to an aspect of the present disclosure, it is possible to check a flaking life of an individual rolling bearing.

## Brief Description of Drawings

FIG. 1 is a partially cutaway view of a rolling bearing according to an embodiment.
FIG. 2 is a diagram showing an example of a bearing life inspection certificate indicating a flaking life of the rolling bearing.

## Description of Embodiments

An embodiment of a rolling bearing according to the present disclosure will be described below. In a rolling bearing, two objects, such as a rolling element and a bearing ring, repeatedly come into contact with each other while they are under a load. This causes stress concentration around an inclusion (non-metallic inclusion) included in a bearing material. Then, cracks occur from the inclusion as an initiation point, and the cracks propagate, leading to flaking (subsurface-initiated flaking). Also, a flaking life originating from an inclusion as an initiation point, which will be described below, is a lifespan of a rolling bearing when used under appropriate conditions, such as being used with appropriate lubrication and under a predetermined appropriate load range.

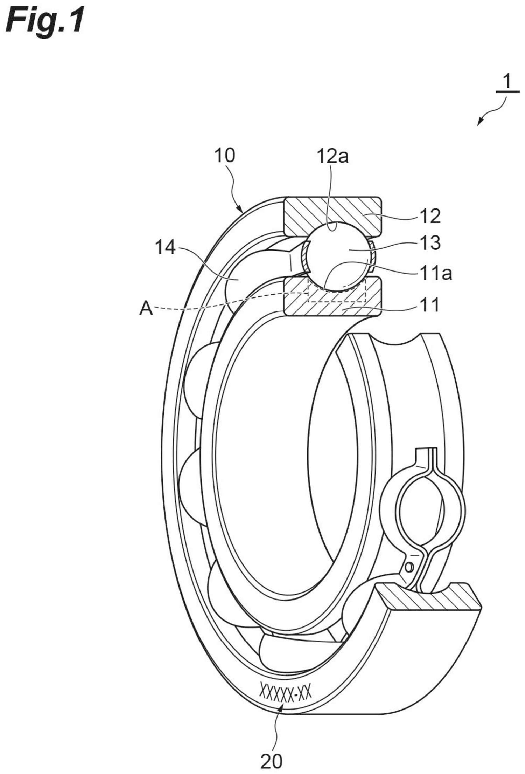

A rolling bearing 1 shown in FIG. 1 is a single-row deep groove ball bearing. Also, in the present embodiment, a case in which the rolling bearing 1 is a single-row deep groove ball bearing will be described as an example. However, the rolling bearing 1 may be a rolling bearing of a type other than a single-row deep groove ball bearing.

The rolling bearing 1 includes a bearing body portion 10. The bearing body portion 10 is marked with a corresponding information display 20. The bearing body portion 10 includes an inner ring 11, an outer ring 12, a plurality of balls (rolling elements) 13, and a retainer 14. The inner ring 11 is an annular member. An outer circumferential surface of the inner ring 11 is provided with a groove-shaped inner ring raceway 11a extending in a circumferential direction thereof. The outer ring 12 is an annular member disposed outside the inner ring 11. An inner circumferential surface of the outer ring 12 is provided with a groove-shaped outer ring raceway 12a extending in the circumferential direction. The plurality of balls 13 are sandwiched between the inner ring raceway 11a and the outer ring raceway 12a and are disposed so that they are arranged in a row in the circumferential direction.

The retainer 14 holds the plurality of balls 13 so that they can roll freely, while maintaining circumferential gaps between the balls 13. The bearing body portion 10 may further include a contact or non-contact seal (not shown). As each material of the inner ring 11, the outer ring 12, and the balls 13, any steel material that can be used for bearings, such as bearing steel, specially heat-treated steel, or stainless steel can be employed.

In the present embodiment, as an example, the corresponding information display 20 is marked on an end face of the outer ring 12 in an axial direction thereof. The corresponding information display 20 may be provided on the outer ring 12 by, for example, engraving, printing, or the like. Also, the corresponding information display 20 may be provided on a location other than the end face of the outer ring 12 (for example, the inner ring 11 or the like). The corresponding information display 20 needs to be provided on at least one location on the bearing body portion 10. For example, the corresponding information display 20 may be a serial number (unique number), a barcode, a two-dimensional code, or the like of the rolling bearing 1.

The corresponding information display 20 is information associated with the flaking life originating from an inclusion as an initiation point included inside the rolling bearing 1. This inclusion is an inclusion included inside the rolling bearing 1. This flaking life is a lifespan of the rolling bearing 1 predicted on the basis of a size of the inclusion included in the rolling bearing 1.

The corresponding information display 20 is associated with the flaking life of the rolling bearing 1 on which the corresponding information display 20 is marked. That is, the flaking life of the rolling bearing 1 on which the corresponding information display 20 is marked can be derived from the corresponding information display 20.

The flaking life may be communicated to the bearing user using paper media or by being displayed on a screen. An example of a method for communicating the flaking life of the rolling bearing 1 to the bearing user from the corresponding information display 20 will be described below.

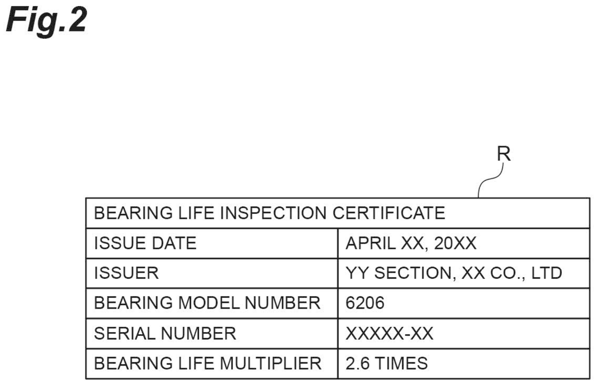

For example, the flaking life of the rolling bearing 1 may be communicated to the bearing user using a bearing life inspection certificate R shown in FIG. 2. The bearing life inspection certificate R may be written on paper, for example. In this example, the corresponding information display 20 is the serial number of the rolling bearing 1. The bearing life inspection certificate R shown in FIG. 2 shows the serial number. For this reason, on the basis of the serial number, the bearing user can ascertain which rolling bearing 1 the bearing life inspection certificate R corresponds to. The bearing life inspection certificate R may, for example, be provided to the bearing user together with the rolling bearing 1, or may be provided to the bearing user separately from the rolling bearing 1.

The bearing life inspection certificate R shows a model number of the bearing serving as a target, a serial number of the product, the predicted flaking life, and the like. In this example, the predicted flaking life (a predicted value of the lifespan) is expressed using a bearing life multiplier. The bearing life multiplier is a multiplier relative to a basic rating life. The basic rating life may be a basic rating life $L_{10}$.

This basic rating life $L_{10}$ is expressed by the following formula.

$$L_{10}=(C/P)^p$$

Here, in the above formula, the basic rating life $L_{10}$ is expressed in units of [1 million revolutions], "C" is a basic dynamic load rating of the rolling bearing in units of [N], "P" is a dynamic equivalent load acting on the rolling bearing in units of [N], and "p" is an exponent. This exponent p is set to 3 for ball bearings and 10/3 for roller bearings.

In this way, the bearing user can identify the bearing life inspection certificate R corresponding to the rolling bearing 1 on the basis of the serial number, which is the corresponding information display 20 marked on the bearing body portion 10. In addition, the bearing user can check the flaking life of the rolling bearing 1 on the basis of the description in the bearing life inspection certificate R corresponding to the rolling bearing 1.

Also, the flaking life of the rolling bearing 1 may be communicated to the bearing user electronically through a display screen. In this case, for example, lifespan deriving information that associates (links) the corresponding information display 20 with the flaking life of the rolling bearing 1 is created in advance. On the basis of this lifespan deriving information, the flaking life of the rolling bearing 1 may be derived from the corresponding information display 20.

Specifically, for example, the bearing user inputs the serial number as the corresponding information display 20 into a lifespan presentation device configured by an electronic device such as a personal computer. The lifespan presentation device extracts the flaking life of the rolling bearing 1 corresponding to the input serial number on the basis of the pre-created lifespan deriving information. Then, the lifespan presentation device may present the extracted flaking life to the bearing user through a display screen or the like.

For example, the corresponding information display 20 may be a barcode or a two-dimensional code. In this case, the bearing user causes a reader of the lifespan presentation device to read the barcode or the two-dimensional code. The lifespan presentation device may extract the flaking life of the rolling bearing 1 corresponding to the read barcode or the like on the basis of the pre-created lifespan deriving information, and present it to the bearing user. For example, by using a two-dimensional code as the corresponding information display 20, the lifespan presentation device can identify more information. For example, by using a two-dimensional code as the corresponding information display 20, it is also possible to determine whether the two-dimensional code is authentic or not.

For example, the above-described lifespan deriving information may be stored on a server provided by a bearing supplier or the like. In this case, the bearing user inputs or loads the corresponding information display 20 on a website, for example. Then, the server may extract the flaking life corresponding to the corresponding information display 20 that has been input or the like on the basis of the lifespan deriving information, and present the extracted flaking life to the bearing user via the website.

In this way, the bearing user can check the flaking life of the rolling bearing 1 on the basis of the corresponding information display 20 marked on the rolling bearing 1.

Next, an example of a procedure for predicting the flaking life originating from the inclusion as the initiation point will be described. Here, the flaking life is predicted for each individual rolling bearing 1.

(Step 1)

First, a non-destructive inspection device capable of measuring sizes and content of inclusions is prepared for the inner ring 11 and the outer ring 12 of the rolling bearing 1 serving as a target for predicting the flaking life. For example, an ultrasonic flaw detector is suitable for this non-destructive inspection device. Also, this non-destructive inspection device may be able to detect inclusions with a minimum size of approximately 50 $\mu$m. As a method for detecting the inclusions with a minimum size of approximately 50 $\mu$m using such an ultrasonic flaw detector, for example, the method described in Japanese Unexamined Patent Publication No. 2021-060373 (Japanese Patent No. 7092101 A) may be used.

(Step 2)

Using the non-destructive inspection device, the sizes and content (number) of the inclusions are detected in a range corresponding to stress volumes directly under the inner ring raceway 11a of the inner ring 11 and directly under the outer ring raceway 12a of the outer ring 12. This range corresponding to the stress volumes may be a range in which stresses acting around the raceways cause the inclusions to flake off. For example, for the inner ring 11, this range may be a range of region A surrounded by the dashed line in FIG. 1.

Also, the bearing ring to be measured is finished through multiple machining processes. Detection of the sizes and content of the inclusions may be performed after completion of any of the machining processes. Typical and major machining processes for bearing rings include, for example, steelmaking, heat treatment (annealing) and forming, forging, turning, heat treatment (quenching and tempering), side grinding, outer diameter grinding, inner diameter grinding, and bearing ring superfinishing, and are performed in that order.

For example, content (cleanliness) of inclusions in a material used may not be sufficient for usage conditions, or there may be significant variation. In this case, it is recommended to perform the inspection as early as possible in the machining processes. Thus, products of insufficient quality caused by amounts of inclusions can be eliminated, thereby reducing losses resulting from performing subsequent processing.

On the other hand, for example, the content (cleanliness) of inclusions in a material used may be sufficiently good for usage conditions, and there may be little variation. In this case, from the perspective of identifying individual products, by performing the inspection as late in the processes as possible, the reliability of traceability can thus be increased. As a specific example, for example, after grinding a side surface of a bearing ring, laser marking with the content including a serial number (product number) is performed on the side surface. This information is used to perform the inspection, and the results can be managed in an inspection system's database.

Also, Japanese Unexamined Patent Publication No. 2021-060373 described above discloses performing non-destructive inspection underwater. General bearing steels are susceptible to rusting due to moisture. For this reason, if the inspection is performed before the completion of finish machining (before the completion of heat treatment or in a process therebefore if an unground surface such as a chamfered portion is included), or if the inspection is performed after the completion of finish machining, it is preferable to remove moisture from a bearing ring surface.

(Step 3)

On the basis of the detection results in step 2, the maximum size of the inclusions included in the range corresponding to the stress volumes of the inner ring 11 and the outer ring 12 is statistically estimated. Here, for example, it is preferable to use a method of extreme value statistics.

(Step 4)

On the basis of the estimated maximum size of the inclusions, the flaking life originating from the inclusions as initiation points is predicted. Various well-known methods can be used to predict the flaking life based on the maximum size of the inclusions. For example, for this prediction method, the method described in Japanese Patent No. 6408222 may be used.

In this way, by performing steps 1 through 4 described above, the flaking life of the targeted rolling bearing 1 originating from the inclusion as the initiation point can be predicted. Then, the corresponding information display 20 associated with the predicted flaking life is marked on the bearing body portion 10. This allows the bearing user to check the flaking life of the rolling bearing 1 marked with the corresponding information display 20 on the basis of the corresponding information display 20.

In addition, in step 2 described above, the inclusion measurements were performed for the inner ring 11 and the outer ring 12 in their actual manufactured states. Alternatively, in step 2, the inclusion measurements may be performed on the material before the inner ring 11 and the outer ring 12 are formed (the portion of the material used to form the inner ring 11 and the outer ring 12). In this case, the same bearing life multiplier is applied to all rolling bearings that use bearing rings manufactured from the same lot of material as the measured material. Further, information that can identify the manufacturing lot is attached to the rolling bearing and packaging as corresponding information display.

As described above, with this rolling bearing 1, the flaking life of the rolling bearing 1 can be checked on the basis of the corresponding information display 20 attached to the bearing body portion 10. Also, this flaking life is predicted on the basis of the size of the inclusion included in the rolling bearing 1. That is, this flaking life represents a lifespan of each individual rolling bearing. In this way, with the rolling bearing 1, the individual flaking life can be checked on the basis of the corresponding information display 20 attached to the bearing body portion 10.

In this way, since the individual flaking life of the rolling bearing 1 can be checked, the rolling bearing 1 can be used for an operating time close to its actual lifespan. Thus, the rolling bearing 1 can reduce the frequency of replacement and the like, thereby improving economical efficiency.

In the above rolling bearing 1, the flaking life is expressed as a multiplier to the basic rating life. In this case, the bearing user can check the degree of flaking life relative to the basic rating life. Then, the bearing user can more easily perform various calculations, such as calculating a usable lifespan of a rolling bearing, for example.

Although the embodiment of the present disclosure has been described above, the present disclosure is not limited to the above embodiment. For example, instead of the corresponding information display 20, a lifespan information display indicating the flaking life may be attached to the bearing body portion 10. This lifespan information display may be a value of the flaking life itself. Also, the lifespan information display may be a display that enables estimation of the flaking life or the degree of flaking life (such as a rank of how long the flaking life is) on the basis of this display.

**Reference Signs List**

1 Rolling bearing, 20 Corresponding information display

**Claims**

1. A rolling bearing in which a lifespan information display indicating a flaking life originating from an inclusion as an initiation point, or a corresponding information display associated with the flaking life is attached to a bearing body portion, wherein

   the inclusion is included in the rolling bearing, and
   the flaking life is a lifespan of the rolling bearing predicted on the basis of a size of the inclusion.

2. The rolling bearing according to claim 1, wherein the flaking life is expressed as a multiplier to a basic rating life.

# Fig.1

1

10    12a

14

A

12

13

11a

11

XXXXX-XX

20

**Fig.2**

| BEARING LIFE INSPECTION CERTIFICATE | R |
|---|---|
| ISSUE DATE | APRIL XX, 20XX |
| ISSUER | YY SECTION, XX CO., LTD |
| BEARING MODEL NUMBER | 6206 |
| SERIAL NUMBER | XXXXX-XX |
| BEARING LIFE MULTIPLIER | 2.6 TIMES |

## INTERNATIONAL SEARCH REPORT

| | International application No. |
|---|---|
| | **PCT/JP2024/004897** |

**A. CLASSIFICATION OF SUBJECT MATTER**

*F16C 33/58*(2006.01)i; *F16C 19/06*(2006.01)i
FI:  F16C33/58; F16C19/06

According to International Patent Classification (IPC) or to both national classification and IPC

**B. FIELDS SEARCHED**

Minimum documentation searched (classification system followed by classification symbols)

F16C33/58; F16C19/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2012-203418 A (NTN CORPORATION) 22 October 2012 (2012-10-22) paragraphs [0002], [0026]-[0068], fig. 1-5 | 1-2 |
| Y | JP 2015-138018 A (NSK LTD.) 30 July 2015 (2015-07-30) paragraphs [0014]-[0027] | 1-2 |
| Y | JP 2017-150820 A (NTN CORPORATION) 31 August 2017 (2017-08-31) paragraphs [0002]-[0005], [0034]-[0041], fig. 3-4 | 1-2 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 April 2024** | **23 April 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/004897**

| Patent document cited in search report | | | Publication date (day/month/year) | Patent family member(s) | | | Publication date (day/month/year) |
|---|---|---|---|---|---|---|---|
| JP | 2012-203418 | A | 22 October 2012 | US 2014/0012527 A1 paragraphs [0002], [0055]-[0114], fig. 1-7 WO 2012/128249 A1 EP 2690516 A1 CN 103492965 A | | | |
| JP | 2015-138018 | A | 30 July 2015 | (Family: none) | | | |
| JP | 2017-150820 | A | 31 August 2017 | WO 2017/051832 A1 | | | |

Form PCT/ISA/210 (patent family annex) (July 2022)

## REFERENCES CITED IN THE DESCRIPTION

**Patent documents cited in the description**

- JP 6408222 B
- JP 2021060373 A
- JP 7092101 A